Europäisches Patentamt

European Patent Office

Office européen des brevets

(19)

(11) EP 0 840 312 A1

(12) **EUROPEAN PATENT APPLICATION**

(43) Date of publication:
06.05.1998 Bulletin 1998/19

(51) Int. Cl.$^6$: **G11B 15/48**

(21) Application number: 97203147.0

(22) Date of filing: 09.10.1997

(84) Designated Contracting States:
AT BE CH DE DK ES FI FR GB GR IE IT LI LU MC NL PT SE

(30) Priority: 31.10.1996 US 740637

(71) Applicant: Ampex Corporation
Redwood City, California 95063-3199 (US)

(72) Inventors:
• Abedor, John
Palo Alto, California 94303 (US)

• Hallamasek, Kurt F.
Oakland, California 94605 (US)

(74) Representative:
Horton, Andrew Robert Grant et al
BOWLES HORTON
Felden House
Dower Mews
High Street
Berkhamsted Hertfordshire HP4 2BL (GB)

(54) **System for estimating a tape pack radius using a numerical Kalman filter**

(57) A system for estimating the radius of a tape pack includes a Kalman filter (26) which uses a measured radius $R_m$ and determines an updated estimate of the tape pack radius as equal to a previous estimate augmented by the product of the filter game and the difference between the measured radius and the previous estimate.

FIG. 1

EP 0 840 312 A1

## Description

### FIELD OF THE INVENTION

The invention relates to tape systems, and in particular, to systems for determining the tape pack radius of supply and/or take-up reels.

### BACKGROUND OF THE INVENTION

Recording and/or playback tape systems control the speeds of the supply and take-up reels based on the amount of tape wound on one or both of the reels, that is, based on the tape pack radius of one or both of the reels. During the operation of the tape system the tape pack radii continuously change as tape is wound onto one reel and off of the other reel. For example, the tape pack radius of the supply reel continuously decreases as the tape is wound onto the take-up reel, whose tape pack radius increases. As the radii change, the speeds of the two reels must be adjusted, such that, ideally, the tension in the tape remains constant.

If the determination of the tape pack radii at any given time is inaccurate, the system may not stop or slow the reels at the appropriate time during a rewind or fast forward operation. This may result in the system pulling the end of the tape off of one of the reels, or worse, in the system breaking the tape. If either of these events occur, the information stored on the tape may then be lost. During the slower record or play-back operations the system may respond to the inaccurate values for the tape pack radii by improperly controlling the speeds of the reels and, thus, varying the tension of the tape. If the tape tension varies too much the recorded and/or played-back images or data may be jumpy or even unintelligible.

In certain prior systems the tape pack radius is calculated based solely on measurements of the angular positions of the reel, and a capstan of known radius that controls the tape feed to or from the reel. The position measurements are made by, for example, optical encoders that count the number of slots that pass between a photo detector and a light source as the reel rotates. These systems essentially determine the rate at which the tape is supplied to or taken from the reel based on the position measurements of the capstan taken at consecutive sample times. They then determine the tape pack radius based on the calculated tape rate and the position measurements of the reel taken at the same sample times.

This method of calculating tape pack radius produces results that are at best as accurate as the position measurements, which are "noisy," in large part because of quantitization errors. At slow speeds, which translate into low resolution measurements, this method produces results that tend to be fairly inaccurate because the quantitization errors are often larger than the differences in the position measurements from one sample time to the next.

Other prior systems use various methods such as low pass filters to add to the system some robustness against inaccurate position measurements. However, these prior systems still make essentially independent determinations of tape pack radius with each position measurement, and thus, provide only limited improvement in accuracy.

### SUMMARY OF INVENTION

The invention is a tape system that uses a Kalman filter, to produce both an estimate of the tape pack radius and an estimate of the associated measurement error variance. The Kalman filter uses least squares approximation to produce updated estimates of the tape pack radius and measurement error variance based on current and past position measurements and past estimates of both the tape pack radius and the measurement error variance. The filter gain is determined from the past estimated error variance and a calculated error variance based on the current position measurements. The system uses both the tape pack radius and the measurement error variance estimates to control the rotational speeds of the reels.

Preferably, the system uses two Kalman filters, one to produce the estimates for the supply reel and one to produce the estimates for the take-up reels.

More specifically, the Kalman filter includes two system models, namely, a predictive model that is based on the dynamics of the system, and a measurement model that is based on the tape path from the capstan to the reel. The Kalman filter predicts the new tape pack radius based on the previous estimate and a weighted correction factor that is calculated from the position measurements the current position measurements and the predictions of the position measurements. The correction factor is weighted by the filter gain, which compensates for measurement noise and noise inherent in the predictive model. The system thus corrects its tape pack radii estimates for measurement errors, and produces more accurate estimations than are produced by known prior systems.

## BRIEF DESCRIPTION OF THE DRAWINGS

The above and further advantages of the invention may be better understood by referring to the following description in conjunction with the accompanying drawings, in which:

Fig. 1 is a functional block diagram of a system constructed in accordance with the invention;
Fig. 2 is a functional block diagram of a subsystem of the system of Fig. 1;
Fig. 3 is a flowchart of the operations of the system of Fig. 1; and
Fig. 4 is a flowchart of the operations of the system of Fig. 1 when the system is operating in a coasting mode.

## DETAILED DESCRIPTION

### 1. The System

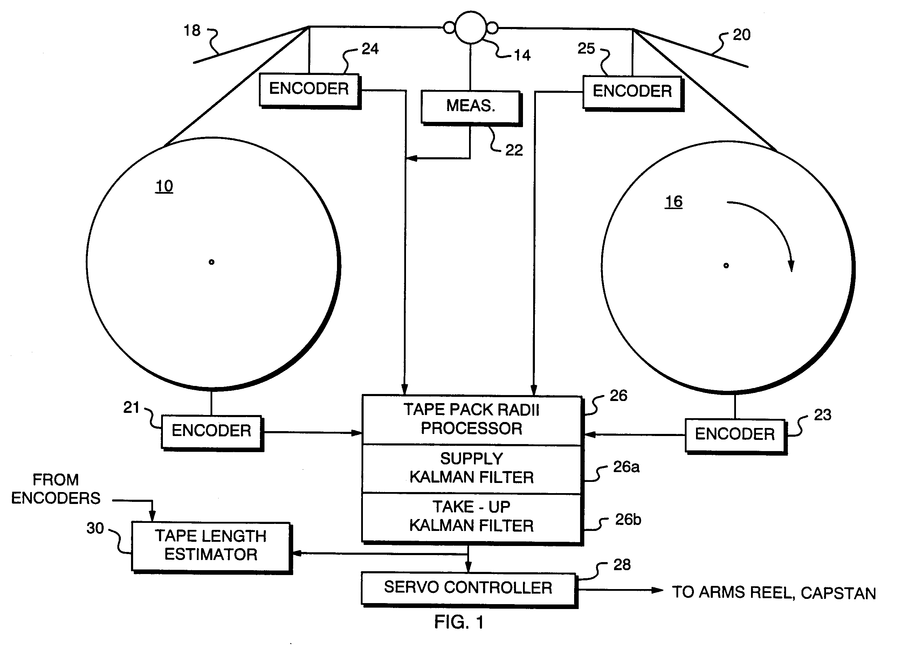

Referring to Fig. 1, a tape system includes a capstan 14 that controls the transfer of tape 12 between a supply reel 10 and a take-up reel 16. Ideally, the system maintains a constant tension in the tape by adjusting the rotational speeds of the reels based on estimates of the changing tape pack radii. Two tension arms 18 and 20 rotate slightly to finely control the tension of the tape 12. When the reels rotate clockwise, as depicted by the arrows, tape is wound off of the supply reel and onto the take-up reel and, thus, the tape pack radius of the supply reel decreases as the tape pack radius of the take-up reel increases.

Angular position transducers 21-25, which may be, for example, optical encoders, are attached to the shafts (not shown) of the capstan 14, the two reels 10 and 16 and the tension arms 18 and 20. The transducers operate in a conventional manner, to measure, respectively, the angular positions of the capstan, the reels and the arms.

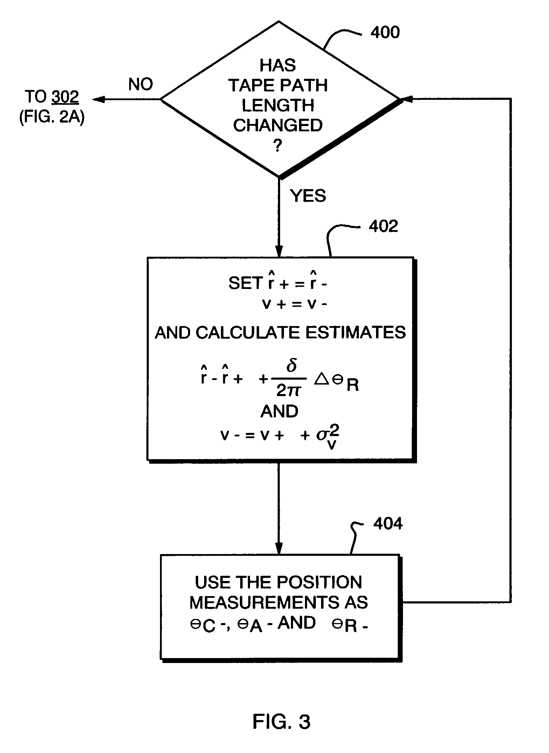

A tape pack radii processor 26 receives the measurements from the transducers 21-25, and uses supply and take-up Kalman filters 26a and 26b, to produce estimates of the tape pack radii and associated measurement error variances. The estimated measurement error variances are essentially confidence ratings of the radii estimates. These estimates are sent to the servo controller 28, which adjusts the rotational speeds of the two reels based on the estimates, as discussed in section 3 below. The operations of the processor 26 are discussed in more detail with reference to Fig. 3 below.

The tape system includes other well-known elements such as a tape scanner (not shown) which are at times included in the tape path (not shown). The effects on the operations of the tape pack radii processor 26 of varying the tape path length to include these elements, are discussed below with reference to Fig. 4.

### 2. The Theory

The same length of tape 12 that is removed from the supply reel 10 is wound onto the take-up reel 16, if we assume that the tape does not stretch and the tape path length does not significantly vary. The length of tape removed from the supply reel is equal to the radius of the supply tape pack multiplied by the change in the angular position of the reel, for relatively small rotational movements of the reel. This same length of tape must also travel around the tension arms, whose movements only slightly alter the length of the tape path, and also past the capstan 14, which has a known, fixed radius $R_c$.

We can look at the system as two subsystems, namely, a supply subsystem that includes the supply reel 10, the supply tension arm 18 and the capstan 14, and a take-up subsystem that includes the take-up reel 16, the take-up tension arm 20 and the capstan 14. The two subsystems have identical theories of operation, and we discuss herein the theory of operation of the take-up subsystem.

The length of tape that is wound onto the take-up tape reel 16 must travel past the capstan 14, and we can state:

$$R_{TR}\Delta\theta_{TR} + \mu_{TA}\Delta\theta_{TA} - R_C\Delta\theta_C = 0$$

where $R_{TR}$ is the radius of the take-up reel tape pack, $\Delta\theta_{TR}$ is the change in angular position of the take-up reel 16 from one sample time to the next, $\Delta\theta_c$ is the change in angular position of the capstan, $\mu_{TA}$ is a gain determined by the geometry of the tape path and the nominal position of the take-up tension arm 20, and $\Delta\theta_A$ is the change in angular position of the arm. The radius of the take-up reel is thus:

$$R_{TR} = \frac{R_C\Delta\Theta_C - \mu_{TA}\Delta\Theta_{TA}}{\Delta\Theta_{TR}} \qquad\qquad eqn.1$$

Position measurements are made at a regular rate, for example, at 50 Hz, or every 20 milliseconds. If the tape is moving slowly, the "deltas," that is, the changes in the angular positions, are small and the position measurements are comparable to the quantitization errors. If the system relies solely on these measurements to determine tape pack radius and ignores both past measurements and the dynamics of the system, errors in position measurements translate directly to inaccuracies in the determination of the tape pack radius. The prior systems discussed above in the Background section all suffer from this problem.

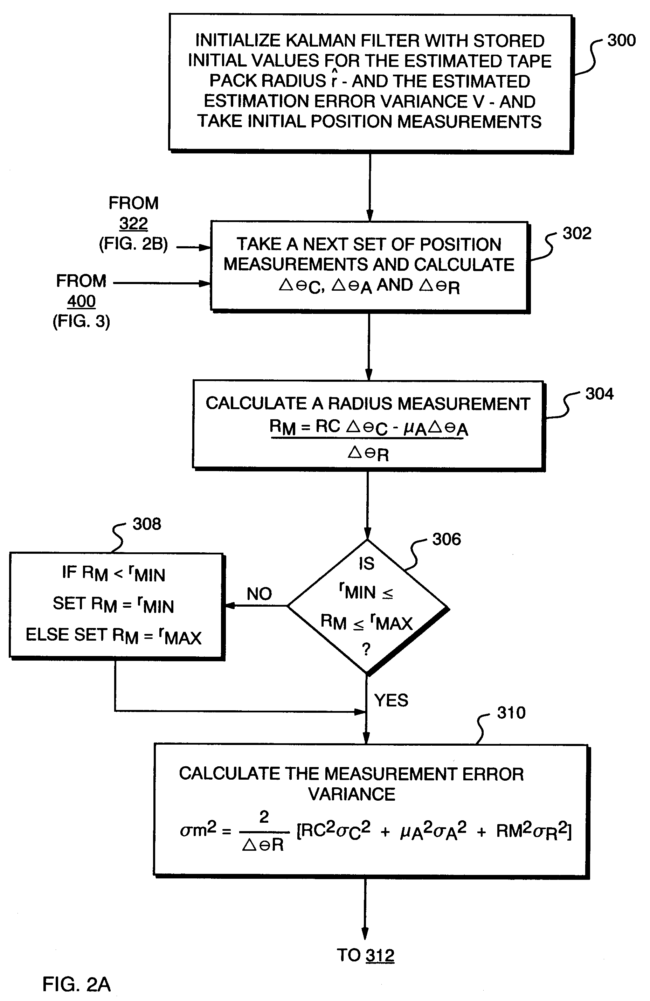

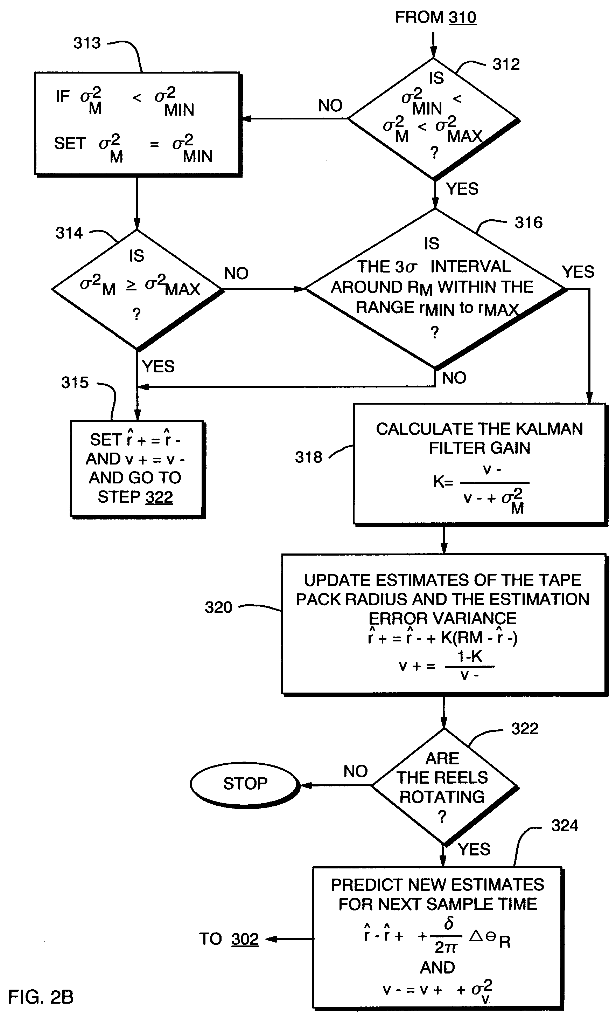

Our system includes a Kalman filter that uses eqn. 1 as part of a measurement model that produces a value $R_M$, which is the measured radius. The Kalman filter also uses a second model that predicts the tape pack radius based on a predicted change in the mass of the tape pack as the tape is wound onto the reel. Referring to Fig. 2, consider the tape pack 200 as a hollow, circular cylindrical mass with width "w", and a uniform density "$d$," i.e. mass per unit volume, where $d$ is the density of the tape itself. If a length of tape "$l$" units long, with width w and thickness "$\delta$" is wound onto the reel, the mass of the tape pack increases by the mass of that length of tape, and the radius of the tape pack increases accordingly.

The mass of the tape pack is:

$$m_{TR} = dw\pi r_1^2 - dw\pi r_0^2$$

where $r_1$ is the outer radius of the tape pack and $r_0$ is the inner radius of the tape pack. The radius of the pack increases to $r_2$ when the length of tape is wound onto the tape pack, and the mass of the tape pack thus increases to:

$$m_{TR_{new}} = dw\pi r_2^2 - dw\pi r_0^2 \qquad \text{eqn.2}$$

The increase in the mass of the tape pack due to the tape being wound onto the reel is $dwl\delta$, and thus:

$$dw\pi r_2^2 - dw\pi r_0^2 = dw\pi r_1^2 - dw\pi r_0^2 + dwl\delta .$$

Solving for $r_2$ we have:

$$r_2 = \left( r_1^2 + \frac{1}{\pi} l\delta \right)^{\frac{1}{2}} \qquad \text{eqn.3}$$

If the reel rotates in the clockwise direction by a small amount $\Delta\theta_{TR}$, a length of tape equal to $r_1\Delta\theta_{TR}$ is wound onto the tape pack and the tape pack radius increases by $\Delta r$, which according to eqn. 3 is:

$$r_1 + \Delta r = \left( r_1^2 + \frac{1}{\pi} r_1\Delta\Theta_{TR}\delta \right)^{\frac{1}{2}}$$

$$= r_1 \left( 1 + \frac{\Delta\Theta_{TR}\delta}{\pi r_1} \right)^{\frac{1}{2}} \approx r_1 \left( 1 + \frac{\Delta\Theta_{TR}\delta}{2\pi r} \right)$$

and

$$\Delta r = \frac{\Delta\Theta_{TR}\delta}{2\pi r_1} \qquad \text{eqn.4}$$

From eqn. 4, we derive a prediction equation that predicts what the tape pack radius will be after a rotation, at time $t_n$. The prediction equation is the integral of eqn. 4 from time $t_1$ to time $t_n$ :

$$r(t_n) - r(t_1) = \frac{\delta}{2\pi} [\Theta_{TR}(t_n) - \Theta_{TR}(t_1)]$$

where $r(t_i)$ is the tape pack radius at time $t_i$, and $\theta_{TR}(t_i)$ is the angular position of the take-up reel at time $t_i$. Thus:

$$r(t_n) = r(t_1) + \frac{\delta}{2\pi}[\Theta_{TR}(t_n) - \Theta_{TR}(t_1)] \qquad \text{eqn.5}$$

Inaccuracies in this model are taken care of by an estimate of "noise" applied to the system - that is, by quantifying as applied noise essentially unmeasurable attributes of the system dynamics. The applied noise is one of the factors that is used in determining the Kalman filter gain, K, as discussed below with reference to Figs. 3 and 4.

To determine the filter gain, the system also requires an estimate of the measurement noise, or error, variance. It uses a small-noise measurement model that assumes that the errors in the various position measurements can be represented by independent, zero-mean random variables $\varepsilon_i$, which each have "small" variances. Based on this assumption, we know that:

$$\text{var}(g(x+\varepsilon)) = \left(\left(\frac{\partial}{\partial x_1}g(x)\right)^2 \text{var}(\varepsilon_1) + ... + \left(\frac{\partial}{\partial x_n}g(x)\right)^2 \text{var}(\varepsilon_n)\right).$$

where x represents the position measurements. Then, based on eqn. 1, we define the function g(x) as:

$$g(\Theta_c, \Theta_{c\text{-}}, \Theta_A, \Theta_{A\text{-}}, \Theta_R, \Theta_{R\text{-}}) = \frac{R_c(\Theta_c - \Theta_{c\text{-}}) - \mu_A(\Theta_A - \Theta_{A\text{-}})}{\Theta_{TR} - \Theta_{TR\text{-}}}$$

where $\Theta_c$ is the position of the capstan at the current sample time, $\Theta_{c\text{-}}$ is the position of the capstan at the previous sample time, $\Theta_A$ and $\Theta_{A\text{-}}$ are the positions of the tension arm at the current and previous sample times, and $\Theta_{TR}$ and $\Theta_{TR\text{-}}$ are the positions of the take-up reel at the current and previous sample times. If these quantities are perturbed, respectively, by independent, zero-mean random variables $\varepsilon_c$, $\varepsilon_A$ or $\varepsilon_R$, the approximate measurement error variance $\sigma_m^2$ is:

$$\sigma_m^2 = \frac{2}{\Theta_{TR} - \Theta_{TR\text{-}}}[R_c^2\text{var}(\varepsilon_c) + \mu_A^2\text{var}(\varepsilon_A) + g(\Theta_c, \Theta_{c\text{-}}, \Theta_A, \Theta_{A\text{-}}, \Theta_{TR}, \Theta_{TR\text{-}})^2\text{var}(\varepsilon_R)] \qquad \text{eqn.6}$$

Measurements that are unreasonable are ignored by the system. As discussed below with reference to Fig. 3 a measurement is considered unreasonable if the associated measurement error variance, $\sigma_m^2$, is greater than the maximum variance $\sigma_{MAX}^2$, or if the three-sigma measurement interval around the calculated measured radius $R_m$, as determined by the measurement model, is not at least partially included within the interval from the minimum tape pack radius, $r_{MIN}$, and the maximum tape pack radius, $r_{MAX}$. By ignoring the unreasonable measurements, the system improves the robustness of the Kalman filter to capstan slip.

The Kalman filters use eqns. 1, 3 and 6 to produce estimates of the tape pack radii and the associated measurement error variances, as discussed below.

### 3. System Operation

Referring now to Figs. 1 and 3, when a tape, for example, a cassette tape, that is wound on the supply and take-up reels 10 and 16, is loaded into the system, the system has no indication of the tape pack radii. Accordingly, the tape pack radii processor 26 must initialize the Kalman filter with stored initialization values and initial position measurements (step 300). The system thus takes measurements of the positions of the capstan, the tension arm, and the reel, that is, measures $\theta_C$, $\theta_A$, and $\theta_R$, where $\theta_R$ is the angular position of the tape reel under consideration, for example, the take-up reel. Preferably, the system takes the measurements of both of the reels, and produces estimates of both the supply reel and the take-up reel tape pack radii and their associated error variances. We discuss below the operations of the system in determining the tape pack radius of the take-up reel 16. The system performs the same operations to produce the estimate of the decreasing tape pack radius of the supply reel 10.

The processor 26 uses as the initial estimate of the tape pack radius:

$$\hat{r}^- = \frac{r_{max} + r_{min}}{2}$$

which is the radius when one-half of the tape is wound on the reel, and uses as an estimate of the initial measurement

error variance:

$$V- = \frac{(r_{max} - r_{min})^2}{12}$$

which is the variance of a uniformly distributed variable over the interval $r_{max}$ to $r_{min}$. This initial estimate of the error variance is relatively large and indicates that the initial estimate of the tape pack radius is likely to be inaccurate.

The processor 26 takes a next set of position measurements $\theta_C$, $\theta_A$, and $\theta_{TR}$, and calculates $\Delta \theta_C$, $\Delta \theta_A$ and $\Delta \theta_{TR}$, using the initial set of measurements as the measurements of the previous sample time, namely, $\theta_{C-}$, $\theta_{A-}$ and $\theta_{TR-}$ (step 302).

Using these delta values, the processor, in step 304, calculates a radius measurement:

$$R_M = \frac{R_c \Delta\Theta_C - \mu_A \Delta\Theta_A}{\Delta\Theta_R}$$

The processor, in step 306, next determines if the radius measurement falls outside of the interval $r_{min}$ to $r_{max}$. If so, the processor sets the calculated $R_M$ to $r_{min}$ if $R_M$ is less than $r_{min}$, or to $r_{max}$ if $R_M$ is greater than $r_{max}$ (step 308).

The system then in step 310 calculates the measurement error variance $\sigma_m^2$, using the measured $\Delta \theta_{TR}$ and the calculated radius $R_M$:

$$\sigma_m^2 = \frac{2}{\Delta\Theta_R}[R_C^2 \text{var}(\varepsilon_C) + \mu_A^2 \text{var}(\varepsilon_A) + R_M^2 \text{var}(\varepsilon_R)]$$

The terms $R_C \text{var}(\varepsilon_C)$, and $\mu_A \text{var}(\varepsilon_A)$ are constants, as is var $(\varepsilon_R)$. If the calculated measurement error variance is less than the minimum variance, which is calculated for $r_{min}$, the system sets $\sigma_m^2$ equal to the minimum variance (steps 312-313). If the measurement error variance is greater than the maximum variance, which is calculated for $r_{max}$, the processor determines that the measurement is unreasonable (steps 312, 314).

Assuming the calculated measurement error variance is not greater than the maximum variance, the processor further tests the reasonableness of the measurement by determining if at least a portion of the three sigma interval around $R_M$ is within the interval of $r_{min}$ to $r_{max}$ (step 316). If so, the processor determines the measurements are reasonable. Otherwise, the system determines that the measurements are unreasonable.

If the measurements are reasonable, the processor, in step 318, calculates the Kalman filter gain, K, as:

$$K = \frac{V-}{V- + \sigma_m^2}$$

where v- is the estimated measurement error variance for the previous sample time. The processor next, in step 320, updates the estimate of the tape pack radius as:

$$\hat{r}^+ = \hat{r}^- + K(R_M - \hat{r}^-)$$

and the estimate of the measurement error variance as:

$$V+ = \frac{1-K}{V-}.$$

It then sends the updated estimates to the servo controller 28. The servo controller uses the error variances to estimate a lower bound for the position of the end of the tape. Thus, the servo controller sets

$$\hat{r} = \hat{r} - 3\sigma_m,$$

as the estimate of the decreasing tape pack radius and

$$\hat{r} = \hat{r} + 3\sigma_m$$

as the increasing tape pack radius, and uses these values to control the speeds of the reels. In this way, the controller protects the system from pulling or breaking the end of the tape off of the reel because of a tape pack radius estimate that is questionable. If the reels are still rotating, the processor, in step 324, sets

$$\hat{r}^- = \hat{r}^+$$

and v- = v+ and repeats steps 302-320 to determine updated estimates of the tape pack radius

$$\hat{r}^+$$

and the associated measurement error variance v+. Otherwise, the system stores both the current estimates and the current position measurements (step 326).

If the processor 26 determines that the measurements are unreasonable, it does not update the filter gain. Further, it does not calculate the updated estimates. Instead, it essentially predicts what the estimates should be based on the previous estimates. The processor, in step 315, sets

$$\hat{r}^+ = \hat{r}^-$$

and v+ = v- and predicts an estimate of the tape pack radius

$$\hat{r}^-$$

as:

$$\hat{r}^- = \hat{r}^+ + \frac{\delta}{2\pi}\Delta\Theta_R$$

and estimates the error variance v- as:

$$v^- = v^+ + \sigma_v^2$$

where $\sigma_v^2$ is a constant that represents the inaccuracies of, or the noise applied to, the predictive model. The processor then sets the measured values $\theta_C$, $\theta_A$ and $\theta_R$ as the prior values $\theta_{C-}$, $\theta_{A-}$ and $\theta_{R-}$, respectively, and repeats steps 302-320 to calculate updated estimates for the next sample time.

The system continues to determine and, as appropriate, predict estimates for the tape pack radii and the associated error variances as long as the tape pack radii are changing.

If the system is, for example, turned off and the tape left in place, the processor 26 retains the prior position measurements and the estimates for the tape pack radii and the associated error variances, and uses them as initial values for the Kalman filter when the system is again turned on (step 328). If the tape is removed from the system and replaced, the tape processor 26 uses instead the stored initialization values (step 300).

Referring now to Fig. 4, the processor operates in a "coasting" mode when the rotational movements of one or both of the reels are attributed to system functions that significantly alter the length of the tape path. For example, the system operates in the coasting mode when the tape is being unwound from one reel and wrapped around, or mounted on, the tape scanner (not shown). The system also operates in a coasting mode when the tape is being rewound on the reel as the tape is being withdrawn from the scanner. These operations, which significantly change the length of the tape path, are not included in the underlying assumptions on which the measurement model in the Kalman filter is based. Accordingly, the measured radius $R_M$ produced by that model cannot be used to determine the estimates of the tape pack radius and the error variance when the path length is so altered. The estimates are instead produced using the predictive model.

The system thus extrapolates from the current estimates of tape pack radius and the error variance to a next sample time by taking a next set of position measurements (step 402), determining $\Delta \theta_C$, $\Delta \theta_A$ and $\Delta \theta_R$ (step 404) and estimating the tape pack radius by:

$$\hat{r}^- = \hat{r}^+ + \frac{\delta}{2\pi} \Delta \Theta_R$$

and the error variance by

$$v^- = v^+ + \sigma_v{}^2$$

where $\sigma_v{}^2$ is a constant that represents the inaccuracies in the predictive model (step 406). It next, in step 408, sets $\theta_{C-}$, $\theta_{A-}$ and $\theta_{R-}$ equal to the measured values, takes new measurements and uses the calculated

$$\hat{r}^-$$

and $v^-$ in the calculations for the estimates for the next sample time. The processor continues operating in the coasting mode while the system is varying the tape path length. Once the tape path length is held constant, the processor again uses both of the models in the Kalman filter, and operates as discussed above with reference to Fig. 3.

Generally, the system operates in the coasting mode for only a small number of consecutive sample times. By predicting new radii and error variance values during the coasting operations, the processor can determine at the end of these operations reliable updated estimates for the tape pack radii and error variance, as well as a reliable filter gain, which is based in part on these estimates.

While the measurement model could be revised to include the system operations in which the path length is varied, it is not necessary since the time the system spends so little time performing these operations. Thus, the trade off of increased complexity in the model for more accuracy during these limited path-varying operations seems unwarranted. Further, since the estimates produced by the Kalman filter converge rapidly, the accuracy of the system is only minimally reduced by not including in the model the path-varying operations.

As discussed above, the processor initially sets the estimate of the measurement error variance to a relatively large value of the tape position. This means that the controller will initially conservatively control the speed of the reels, based on a much smaller estimate of the tape pack.

The foregoing description has been limited to a specific embodiment of this invention. It will be apparent, however, that variations and modifications may be made to the invention, with the attainment of some or all of its advantages. Therefore, it is the object of the appended claims to cover all such variations and modifications as come within the true spirit and scope of the invention.

## Claims

1. A system for estimating tape pack radii, the system including:

    a. a tape supply reel;
    b. a tape take-up reel;
    c. a capstan for controlling the tape supply to and from the reels;
    d. means for measuring the angular position of the reels and the capstan;
    e. a Kalman filter for calculating an estimate of the tape pack radius by

i. determining a measured radius $R_M$ based on the position measurements;
ii. using the measured radius and determining

$$\hat{r}^{+}$$

the updated estimate of the tape pack radius as:

$$\hat{r}^{+} = \hat{r}^{-} + K\left(R_M - \hat{r}^{-}\right)$$

where

$$\hat{r}^{-}$$

is the previous estimate of the radius, and K is the filter gain.

2. The system of claim 2 wherein the Kalman filter further

iii. calculates a measurement error variance $\sigma_m^2$,
iv. updates the filter gain K based on the calculated error variance $\sigma_m^2$ and a previous estimate $v^-$ of the error variance;
v. calculates an updated error variance estimate $v^+$ based on the filter gain K and the previous error variance estimate $v^-$.

3. The system of claim 2 wherein the Kalman filter

a. determines filter gain as

$$K = \frac{v^-}{v^- + \sigma_m^2}$$

and
b. determines the updated estimate of the measurement error variance as

$$v^+ = \frac{1-K}{v^-}.$$

4. The system of claim 3 wherein the system further includes a tension arm, and

a. the means for measuring the angular positions measures the angular position of the arm, and
b. the Kalman filter uses the arm position measurements to determine the measured radius $R_M$.

5. The system of claim 2 wherein the Kalman filter

a. determines if position measurements are unreasonable; and
b. if so, produces an estimate of the tape pack radius to be used in updating the estimate at a next sample time in which the measurements are reasonable as

$$\hat{r}^{+} = \hat{r}^{-}$$

$$\hat{r}^{-} = \hat{r}^{+} + \frac{\delta}{2\pi}\Delta\Theta_{R}$$

where $\delta$ is the width of the tape supplied to the reel and $\Delta\theta_{R}$ is the change in angular position of the reel from the previous sample time to the current sample time.

6. The system of claim 5 wherein the Kalman filter, for unreasonable measurements, produces an estimate of the measurement error variance to be used in updating the estimated measurement error variance at a next sample time in which the position measurements are reasonable as:

$$v^{+} = v^{-}$$

$$v^{-} = v^{+} + \sigma_{v}^{2}$$

where $\sigma_{v}^{2}$ is a constant that represents noise inherent in the system.

7. The system of claim 6 wherein the Kalman filter

    a. determines filter gain as

$$K = \frac{v^{-}}{v^{-} + \sigma_{m}^{2}},$$

    and
    b. determines an updated error variance estimate as

$$v^{+} = \frac{1-K}{v^{-}}.$$

8. A system for estimating tape pack radius, the system including:

    a. a tape supply reel;
    b. a tape take-up reel;
    c. a capstan for controlling the tape supply to and from the reels;
    d. means for measuring the angular position of the reels and the capstan;
    and
    e. a Kalman filter for calculating an estimate of the tape pack radius, the filter including

        i. a prediction model of a tape supply subsystem for determining a predicted tape pack radius

$$\hat{r}^{+},$$

        ii. a measurement model of the tape supply subsystem for producing a measured tape pack radius value $R_{M}$,
        iii. means for determining a calculated measurement error variance $\sigma_{m}^{2}$ associated with the predicted tape pack radius and the measured tape pack radius values,
        iv. means for determining a filter gain, K, based on the calculated error variance, and

v. means for estimating the tape pack radius as

$$\hat{r}^+ = \hat{r}^- + K\left(R_m - \hat{r}^-\right).$$

where

$$\hat{r}^-$$

the estimated tape pack radius for the previous sample time.

9.  A system for estimating tape pack radius, the system including:

    a. a tape supply reel;
    b. a tape take-up reel;
    c. a capstan with fixed radius for controlling the tape supply to and from the reels;
    d. means for measuring the angular position of the reels and the capstan;
    e. a filter that produces the tape pack estimates, the filter including

        i. a measurement model of the tape path that determines a measured tape pack radius based on a previous estimate of the tape pack radius, the rotation of the reel and the fixed radius of the capstan, and
        ii. a predictive model that predicts tape pack radius based on a previous estimate of the tape pack radius and a weighted correction factor, which is the measured tape pack radius determined by the measurement model weighted by filter gain.
        iii. Updating means for updating the filter gain and the estimate of the tape pack radius based on a calculated and an estimated value for measurement error variance.

10. The system of claim 9 wherein the predictive model is based on a change in the mass of the tape pack as tape is wound onto or off of the reel.

FIG. 1

ENCODER 24

MEAS. 22

ENCODER 25

18

20

14

10

16

ENCODER 21

ENCODER 23

TAPE PACK RADII PROCESSOR 26

SUPPLY KALMAN FILTER 26a

TAKE - UP KALMAN FILTER 26b

FROM ENCODERS

TAPE LENGTH ESTIMATOR 30

SERVO CONTROLLER 28

TO ARMS REEL, CAPSTAN

EP 0 840 312 A1

INITIALIZE KALMAN FILTER WITH STORED INITIAL VALUES FOR THE ESTIMATED TAPE PACK RADIUS $\hat{r}$ - AND THE ESTIMATED ESTIMATION ERROR VARIANCE V - AND TAKE INITIAL POSITION MEASUREMENTS — 300

FROM
322
(FIG. 2B)

FROM
400
(FIG. 3)

TAKE A NEXT SET OF POSITION MEASUREMENTS AND CALCULATE $\triangle\theta_C$, $\triangle\theta_A$ AND $\triangle\theta_R$ — 302

CALCULATE A RADIUS MEASUREMENT
$$R_M = \frac{RC\,\triangle\theta_C - \mu_A\triangle\theta_A}{\triangle\theta_R}$$ — 304

IF $R_M < r_{MIN}$
SET $R_M = r_{MIN}$
ELSE SET $R_M = r_{MAX}$ — 308

308

NO ← IS $r_{MIN} \leq R_M \leq r_{MAX}$ ? — 306

YES

CALCULATE THE MEASUREMENT ERROR VARIANCE
$$\sigma m^2 = \frac{2}{\triangle\theta_R}\,[RC^2\sigma_C^2 + \mu_A^2\sigma_A^2 + R_M^2\sigma_R^2]$$ — 310

TO 312

FIG. 2A

FROM 310

**312**
IS
$\sigma^2_{MIN} < \sigma^2_M < \sigma^2_{MAX}$ ?

NO →

**313**
IF $\sigma^2_M < \sigma^2_{MIN}$

SET $\sigma^2_M = \sigma^2_{MIN}$

YES

**314**
IS
$\sigma^2_M \geq \sigma^2_{MAX}$ ?

NO →

**316**
IS
THE $3\sigma$ INTERVAL AROUND $R_M$ WITHIN THE RANGE $r_{MIN}$ to $r_{MAX}$ ?

YES

NO

YES

**315**
SET $\hat{r}+ = \hat{r}-$
AND $v+ = v-$
AND GO TO
STEP 322

**318**
CALCULATE THE KALMAN FILTER GAIN

$$K = \frac{v-}{v- + \sigma^2_M}$$

**320**
UPDATE ESTIMATES OF THE TAPE PACK RADIUS AND THE ESTIMATION ERROR VARIANCE

$$\hat{r}+ = \hat{r}- + K(R_M - \hat{r}-)$$
$$v+ = \frac{1-K}{v-}$$

**322**
ARE
THE REELS
ROTATING ?

NO → STOP

YES

**324**
PREDICT NEW ESTIMATES FOR NEXT SAMPLE TIME

$$\hat{r}- \hat{r}+ + \frac{\delta}{2\pi} \triangle \ominus_R$$
AND
$$v- = v+ + \sigma^2_v$$

TO 302 ←

FIG. 2B

400

HAS
TAPE PATH
LENGTH
CHANGED
?

NO → TO 302 (FIG. 2A)

YES

402

SET $\hat{r}+ = \hat{r}-$
$v+ = v-$

AND CALCULATE ESTIMATES

$$\hat{r}- \hat{r}+ \ + \frac{\delta}{2\pi} \triangle \Theta_R$$

AND

$$v- = v+ \ + \sigma_v^2$$

404

USE THE POSITION
MEASUREMENTS AS
$\Theta_C-$, $\Theta_A-$ AND $\Theta_R-$

FIG. 3

**European Patent Office**

**EUROPEAN SEARCH REPORT**

Application Number

EP 97 20 3147

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | US 5 248 112 A (RODAL DAVID R ET AL) * column 5, line 42 – column 7, line 49; figure 3 * | 1 | G11B15/48 |
| A | US 4 731 679 A (O'GWYNN DAVID C ET AL) * column 3, line 40 – column 6, line 25; figure 1 * | 1 | |

TECHNICAL FIELDS SEARCHED (Int.Cl.6)

G11B

The present search report has been drawn up for all claims

| Place of search | Date of completion of the search | Examiner |
|---|---|---|
| THE HAGUE | 30 January 1998 | Ressenaar, J-P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)